# EUROPÄISCHE PATENTSCHRIFT

(11) **EP 0 954 969 B1**
(45) Veröffentlichungstag und Bekanntmachung des Hinweises auf die Patenterteilung: **22.09.2004**
(21) Anmeldenummer: 99107231.5
(22) Anmeldetag: 14.04.1999
(51) Int. Cl.: A21B 1/26, A21B 1/14

(54) **Heizregister mit Wirbelblechen**
Heating element with swirl sheets
Elément de chauffage à tôles tourbillonantes

(30) Priorität: 06.05.1998 DE 19820068
(43) Veröffentlichungstag der Anmeldung: 10.11.1999
(73) Patentinhaber: Werner & Pfleiderer Lebensmitteltechnik GmbH, 91550 Dinkelsbühl (DE)
(72) Erfinder: Dollinger, Rainer, 91550 Dinkelsbühl (DE); Hafner, Josef, 91626 Schopfloch (DE); Knost, Claudia, 91550 Dinkelsbühl (DE)
(74) Vertreter: Rau, Albrecht

(56) Entgegenhaltungen:
- EP-A- 0 392 150
- EP-A- 0 526 768
- CH-A- 446 230
- DE-A- 2 628 430
- DE-A- 19 516 514
- DE-A- 19 820 061
- FR-A- 1 373 711
- FR-A- 1 552 161
- GB-A- 764 835

## Beschreibung

Die Erfindung betrifft einen Backofen gemäß dem Oberbegriff des Anspruchs 1.

Bei Durchlauf-Mehretagenbacköfen wird jeder Backraum durch oberhalb und unterhalb angeordnete Heizregister, die Teil der Heizeinrichtung sind, beheizt. Hierzu werden in den Heizregistern vorhandene Heizgaskanäle, die im Wesentlichen senkrecht zur Beschickungsrichtung des Backofens verlaufen, von einem Heizgas durchströmt. Da das Heizgas entlang der Heizgaskanäle einen nicht unwesentlichen Teil seiner Energie an den jeweiligen Backraum abgibt, entsteht innerhalb des Backraumes senkrecht zur Beschickungsrichtung ein Temperaturgradient von 30° - 50° K. Durch diesen Temperaturunterschied wird die Qualität der Backwaren stark beeinträchtigt.

Ein gattungsgemäßer Backofen ist aus der CH-PS 446 230 bekannt. Dort werden verschiedene Konfigurationen von Schwellen in den Heiz-Fluid-Kanälen beschrieben, mit denen die Heizgase zur höheren Wärmeabgabe an das jeweilige Heizregister verwirbelt werden. Hiermit wird eine gewisse Vergleichmäßigung des Temperaturprofils innerhalb jedes Backraums erreicht. Es besteht weiterhin das Bedürfnis, insbesondere für anspruchsvolle Backaufgaben eine verbesserte Vergleichmäßigung des Temperaturprofils zu erreichen.

Aus der GB-PS 764 835 ist ein Backofen mit mehreren Herden und zugeordneten Heizregistern bekannt, bei dem eine erhöhte Wärmeabgabe über eine längs des Strömungsverlaufs vergrößerte Anzahl von Rippen zum Wärmeübertrag zwischen dem Heiz-Fluid-Kanal und dem zugeordneten Backraum erreicht werden soll. Auch hier besteht im Blick auf eine Vergleichmäßigung des Temperaturprofils innerhalb der Backräume noch Verbesserungsbedarf.

Es ist daher Aufgabe der vorliegenden Erfindung, einen gattungsgemäßen Backofen derart weiterzubilden, dass innerhalb jedes Backraumes ein möglichst gleichmäßiges Temperaturprofil aufrechterhalten werden kann.

Diese Aufgabe wird durch die Merkmale des kennzeichnenden Teils des Anspruchs 1 gelöst. Im Heizregister sind an den Heizflächen Turbulenz-Elemente in Form von Wirbelblechen vorgesehen, sodass die laminare Grenzschicht der Heizgasströmung vor allem im hinteren Bereich der Heizgaskanäle unterbrochen wird. Die Wärmeabgabe über die Heizplatten wird zudem über die Isolations-Elemente beeinflusst. Zusätzliche Vorteile der Erfindung ergeben sich aus den Unteransprüchen.

Weitere Merkmale, Einzelheiten und Vorteile der Erfindung ergeben sich aus der nachfolgenden Beschreibung eines Ausführungsbeispiels anhand der Zeichnung. Es zeigt
- Fig. 1: eine Querschnitts-Darstellung eines Mehretagenbackofens und
- Fig. 2: eine Querschnitts-Darstellung eines Heizregisters gemäß Fig. 1.

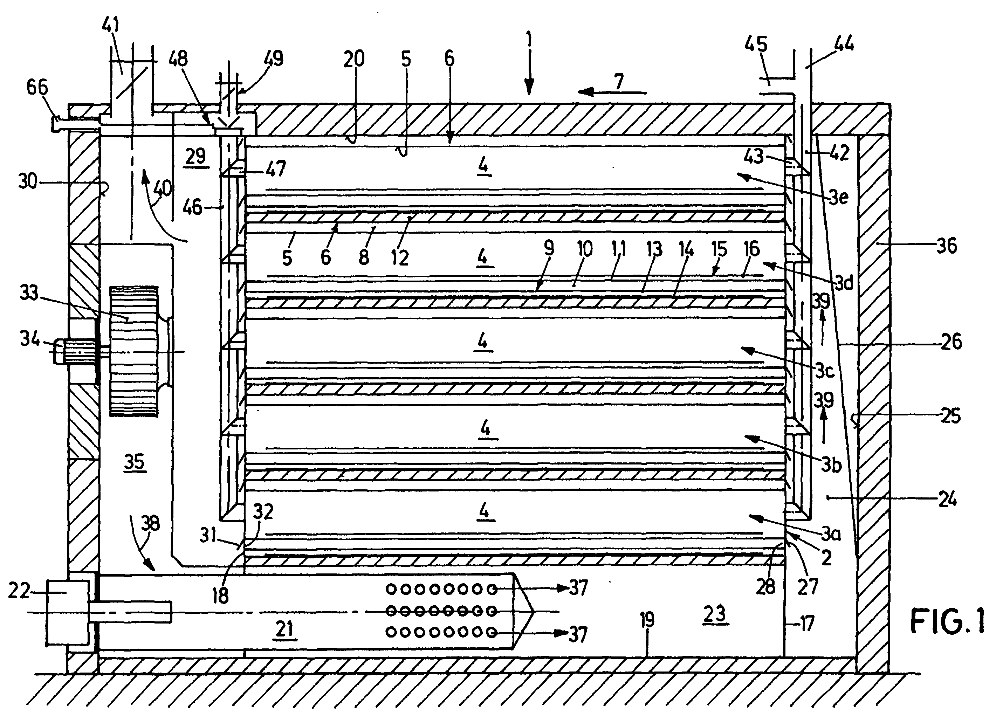

Der in Figur 1 dargestellte Backofen 1 ist ein sogenannter Mehretagen-Durchlaufofen, in dem ein Herdkörper 2 vorgesehen ist, in dem fünf Herde 3a, 3b, 3c, 3d und 3e etagenartig übereinander angeordnet sind. Jeder Herd weist einen Backraum 4 auf, der an seiner Oberseite durch eine im wesentlichen nur durch Wärmestrahlung heizende obere, durch ein dünnes Blech gebildete Heizfläche 5 begrenzt ist. Diese Heizfläche 5 ist Teil eines Oberhitze-Heizregisters 6, das horizontal und entlang der Querrichtung 7 des Backofens 1 verlaufende Heizgaskanäle 8 aufweist. Jeder Backraum 4 weist an seiner Unterseite ein im Prinzip gleichartig mit den Oberhitze-Heizregistern 6 aufgebautes Unterhitze-Heizregister 9 auf, das ebenfalls horizontal und entlang der Querrichtung 7 verlaufende Heizgaskanäle 10 aufweist und durch eine untere Heizfläche 11 zum Backraum 4 begrenzt wird. Auch diese Heizfläche 11 wird durch ein dünnes Blech gebildet.

Unterhalb jedes Unterhitze-Heizregisters 9 und im Abstand zu diesem, d.h. oberhalb des Oberhitze-Heizregisters 6 des nächst unteren Herdes 3b bis 3e, ist eine Zwischenisolierung 12 angebracht, um die einzelnen Herde 3a bis 3e thermisch möglichst voneinander zu trennen. Zwischen einem Unterhitze-Heizregister 9 und der darunter liegenden Zwischenisolierung 12 ist ein Rückführkanal 13 für das Untertrum 14 eines Backbandes 15 vorgesehen, dessen Obertrum 16 oberhalb der unteren Heizfläche 11 des Unterhitze-Heizregisters 9 eines Herdes 3a bis 3e durch dessen Backraum 4 geführt wird. Die Herde 3a bis 3e werden durch jeweils eine vertikale Seitenwand 17 und eine Seitenwand 18 begrenzt, die im Herdkörper 2 senkrecht zur in Figur 1 gezeigten Schnittebene verlaufen und am Boden 19 und der Decke 20 des Herdkörpers 2 abgestützt bzw. befestigt sind.

Unterhalb des untersten Herdes 3a ist eine im wesentlichen zylindrische Brennkammer 21 angeordnet, in die ein Brenner 22 einmündet. Der Brennkammer 21 ist ein Heizgas-Mischraum 23 nachgeordnet, der wiederum in das unterste Ende eines Heizgas-Zuführkanals 24 einmündet, der zwischen der einen Seitenwand 17 der Herde 3a bis 3e und der benachbarten Außenwand 25 des Herdkörpers 2 ausgebildet ist. Der Heizgas-Zuführkanal 24 wird außer durch die Seitenwand 17 durch eine zur Seitenwand 17 nach oben hin geneigte Begrenzungswand 26 begrenzt, so daß der Heizgas-Zuführkanal 24 einen nach oben abnehmenden Querschnitt aufweist. Die Heizgaskanäle 8 und 10 der Heizregister 6 und 9 sind an den Heizgas-Zuführkanal 24 angeschlossen, wobei jeweils Regelklappen 27 vorgesehen sind, mittels derer die Größe der Eintrittsöffnung 28 jedes Heizregisters 6 bzw. 9 veränderbar ist.

Die Heizgaskanäle 8 und 10 aller Herde 3a bis 3e münden in einen Heizgas-Sammelraum 29, der zwischen der Seitenwand 18 und einer zugeordneten Außenwand 30 des Herdkörpers 2 angeordnet ist. Alternativ oder kumulativ zu den Regelklappen 27 in der jeweiligen Eintrittsöffnung 28 der Heizgaskanäle 8 bzw. 10 können auch gleichartig ausgebildete Regelklappen 31 in den Austrittsöffnungen 32 der Heizgaskanäle 8 bzw. 10 in den Heizgas-Sammelraum 29 vorgesehen sein. Der Heizgas-Sammelraum 29 mündet in ein Heizgas-Gebläse 33, das mittels eines Motors 34 angetrieben wird. Dieses Gebläse 33 mündet wiederum in einen Heizgas-Rückführkanal 35, dem die Brennkammer 21 nachgeordnet ist. Die Decke 20, der Boden 19 und die Außenwände 25, 30 des Herdkörpers 2 sind mittels einer Isolation 36 thermisch isoliert.

Die durch die Verbrennung im Brenner 22 entstehenden heißen Rauchgase strömen entsprechend den Strömungsrichtungspfeilen 37 aus der Brennkammer 21 in den Heizgas-Mischraum 23. Dort werden sie mit entsprechend den Strömungsrichtungspfeilen 38 zugeführten abgekühlten Heizgasen gemischt, wodurch Heizgas mit einer entsprechenden Mischtemperatur erzeugt wird. Dieses Heizgas wird entsprechend den Strömungsrichtungspfeilen 39 durch den Heizgas-Zuführkanal 24 und die Eintrittsöffnungen 28 den Heizregistern 6 bzw. 9 zugeführt. Durch den Sog des Heizgas-Gebläses 33 wird es durch die Heizregister 6 bzw. 9 gesaugt und verläßt diese durch die Austrittsöffnungen 32. Es durchströmt den Heizgas-Sammelraum 29 und wird dann mittels des Heizgas-Gebläses 33 in den Heizgas-Rückführkanal 35 gedrückt, von wo aus es - wie bereits erläutert - zur Brennkammer 21 gelangt. In dem Maße, in dem Heizgas vom Brenner 22 dem Heizgas-Mischraum 23 neu zugeführt wird, werden abgekühlte Heizgase entsprechend dem Strömungsrichtungspfeil 40 durch einen Kamin 41 abgeführt. Die Heizgase durchströmen die Heizregister 6 bzw. 9 geradlinig entlang der Querrichtung 7. Sie können auch zum Zwecke besserer Wärmeübertragung durch in den Heizregistern 6 bzw. 9 angeordnete Formelemente verwirbelt oder umgelenkt werden.

Im Bereich des Heizgas-Zuführkanals 24 ist pro Herd 3a bis 3e eine vertikal verlaufende und nach oben herausgeführte Zuführleitung 42 angeordnet, die mit einer Stichleitung 43 durch die Seitenwand 17 hindurch in den Backraum 4 jedes Herdes 3a bis 3e eintritt. Die Zuführleitung 42 ist an ihrem äußeren Ende mit einer Dampf-Zuführleitung 44 und einer Frischluft-Zuführleitung 45 verbunden. Durch die Zuführleitung 42 kann jedem Herd gesondert entweder Schwaden, d.h. Wasserdampf, zum Beschwaden des Backguts oder Frischluft zum Entschwaden zugeführt werden. Im Bereich des Heizgas-Sammelraums 29 sind den Zuführleitungen 42 entsprechende Abführleitungen 46 angeordnet, die jeweils mittels einer Stichleitung 47 durch die Seitenwand 18 jeweils mit dem Backraum 4 je eines Herdes 3a bis 3e verbunden sind. Die Abführleitungen 46 sind über Absperr-Elemente 48 mit einem nach außen führenden Entschwadungskamin 49 verbunden, durch den Schwaden und Abluft nach außen abgeführt werden können.

Auf der Beladeseite des Backofens 1, die sich entgegen der Blickrichtung in Figur 1 befindet, ist ein übliches Kopf-Element vorgesehen, in dem die Umlenkung der endlosen Backbänder 15 erfolgt. Auf der in Figur 1 in Blickrichtung liegenden Entladeseite ist ein Abschluß-Element angeordnet, in dem die Backbänder 15 angetrieben und umgelenkt werden. Die Strömungsrichtung des Backbandes 15 ist senkrecht zur Schnittebene von Figur 1 in Blickrichtung des Betrachters. Es ist möglich, zwischen dem Kopf-Element und dem Abschluß-Element mehrere Backöfen 1 modulartig und fluchtend hintereinander anzuordnen, wobei sich jedes Backband 15 in diesem Fall durch die fluchtend hintereinander angeordneten Backräume 4 der insoweit einander jeweils zugeordneten Herde 3a, 3b, 3c, 3d bzw. 3e erstreckt. Am Kopf-Element und Abschluß-Element sind Klappen vorgesehen, die die Backräume 4 im geschlossenen Zustand nach vorne und nach hinten begrenzen und durch die im geöffneten Zustand Teiglinge zugeführt bzw. fertiges Backgut entnommen werden. Die Beladung auf der Beladeseite durch das Kopf-Element mit Backgut und die Entladung auf der Entladeseite durch das Abschluß-Element erfolgen in der wie bei Mehretagen-Durchlauföfen üblichen und bekannten Weise.

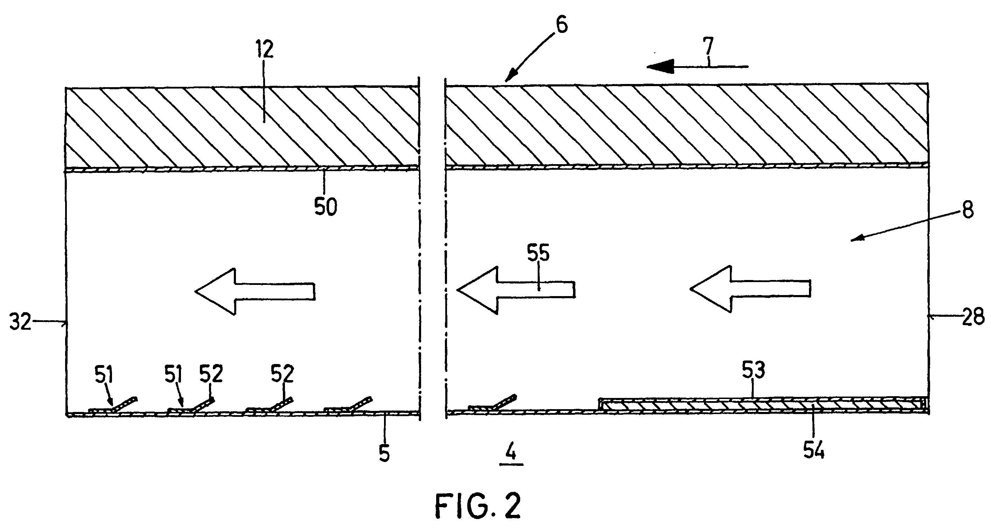

Im folgenden wird der Aufbau der Heizregister 6 bzw. 9 genauer beschrieben. In Fig. 2 ist das Oberhitze-Heizregister 6 dargestellt. Die Heizgaskanäle 8 werden auf der der Heizfläche 5 gegenüberliegenden Seite durch eine Kanalwand 50 begrenzt, welche ebenfalls durch ein dünnes Blech gebildet wird. Daran angrenzend ist, wie bereits oben beschrieben, die Zwischenisolierung 12 vorgesehen. Die in Fig. 2 in Blickrichtung verlaufende Breite der Heizgaskanäle 8 verjüngt sich in Querrichtung 7. Eine Reduktion der Querschnittsfläche der Heizgaskanäle 8 in Querrichtung 7 kann auch durch Reduktion des Abstandes zwischen Heizfläche 5 und Kanalwand 50, also durch eine Reduktion der Höhe der Heizgaskanäle 8 erreicht werden. Es ist jedoch auch möglich, die Heizgaskanäle 8 mit konstantem Querschnitt vorzusehen. Entlang eines Teils der Heizfläche 5 sind auf der Innenseite der Heizgaskanäle 8 Wirbelbleche 51 angebracht, welche einen schräg entgegen der Querrichtung 7 verlaufenden Wirbelsteg 52 aufweisen. Die Wirbelbleche 51 sind entlang eines sich von der Austrittsöffnung 32 erstreckenden Teils der Länge der Heizgaskanäle 8 angeordnet. Der Bruchteil der Heizgaskanäle 8, entlang dessen Wirbelbleche 51 angeordnet sind, hängt von der Dimensionierung des Backofens 1 ab. In der Praxis hat sich eine Erstreckung über 35 % bis 75 % der Länge als vorteilhaft erwiesen. Die Zahl der Wirbelbleche 51 und deren Abstand voneinander wird ebenfalls der Dimensionierung des Backofens 1 angepaßt. Der sich von der Eintrittsöffnung 28 über 10 % - 40 % der Länge erstreckende Teil der Heizgaskanäle 8, der nicht mit Wirbelblechen 51 versehen ist, weist ein an der Heizfläche 5 angeordnetes Isolierblech 53 auf, das einen mit Isoliermaterial 54 gefüllten Raum gegenüber dem jeweiligen Heizgaskanal 8 begrenzt. Anstelle des Isoliermaterials oder zusätzlich zu diesem kann das Isolierblech 53 mit einem thermisch isolierenden Anstrich versehen sein. Das Isoliermaterial 54 und der Isolieranstrich können sich auch über einen von der Eintrittsöffnung 28 in Querrichtung 7 erstreckenden Bruchteil des Isolierblechs 53 erstrecken. Zwischen den Wirbelblechen 51 und dem Isolierblech 53 kann entlang 10 % - 30 % der Länge des jeweiligen Heizgaskanals 8 die Heizfläche 5 freiliegend ohne die vorgenannten Bleche vorgesehen sein. Das Unterhitze-Heizregister 9 ist analog zu dem Oberhitze-Heizregister 6 aufgebaut, wobei die Wirbelbleche 51 und das Isolierblech 53 nun an der unteren Heizfläche 11 angeordnet sind, so daß eine gegenüber Figur 2 entlang der Querrichtung 7 gespiegelte Anordnung entsteht.

Sofern ein Heizregister 6 bzw. 9 der Beheizung eines unmittelbar darüber und darunter liegenden Backraumes 4 dient, sind die Heizgaskanäle 8 bzw. 10 durch Heizflächen 11 und 5 nach oben und unten begrenzt, an denen jeweils Wirbelbleche 51 und Isolierbleche 53 angeordnet sind. Eine Zwischenisolierung 12 ist in diesem Fall nicht vorgesehen.

Anders als in Figur 2 dargestellt, können die Wirbelbleche 51 und Isolierbleche 53 nicht fest mit der Heizfläche 5 verbunden, sondern in Form eines Einschub-Elements ausgebildet sein. Bei dem Einschub-Element sind die in einem Heizgaskanal 8 bzw. 10 vorgesehenen Wirbelbleche 51 und das Isolierblech 53 durch äußere, entlang der Querrichtung 7 verlaufende Stege miteinander zu einer Einheit verbunden. Dieser Einschub kann seitlich durch die Eintrittsöffnungen 28 bzw. Austrittsöffnungen 32 eingeschoben werden. Im Fall eines Oberhitze-Heizregisters 6 liegt der Einschub auf der Heizfläche 5 auf. Im Fall eines Unterhitze-Heizregisters 9 bedarf der Einschub einer Stützeinrichtung, die ihn an der unteren Heizfläche 11 hält.

Wie oben beschrieben, erfolgt die Beheizung des Backofens 1 durch einen Heizgasstrom. Grundsätzlich ist jedoch auch die Verwendung heißen Öls als Heizmedium möglich.

Wie oben beschrieben, strömt beim Betrieb des Backofens 1 Heizgas durch die Eintrittsöffnungen 28 in die Heizgaskanäle 8 bzw. 10 ein und durchströmt die Kanäle entlang der Strömungsrichtung 55, wobei sich die Strömungsgeschwindigkeit in Folge des sich verjüngenden Querschnitts erhöht. Hierbei passiert das Heizgas zunächst den Bereich, in dem die Heizfläche 5 durch das Isolierblech 53 bedeckt ist, so daß die Wärmeabgabe an den angrenzenden Backraum 4 geringer ist, als würde das Isolierblech 53 fehlen. Sobald das Heizgas die Wirbelbleche 51 erreicht, bilden sich vor allem im Bereich der Heizfläche 5 Turbulenz-Zonen, wodurch die laminare Grenzschicht des Heizgasstromes an der Heizfläche 5 unterbrochen wird und die Wärmeabgabe des Heizgases an die Heizfläche 5 erhöht wird. Aufgrund der oben beschriebenen Anordnung kann das Temperaturprofil entlang der Querrichtung 7 im Backraum bis auf wenige Grad Kelvin konstant eingestellt werden, wodurch die senkrecht zur Querrichtung 7 zugeführten bzw. entnommenen Backwaren gleichmäßig gebacken werden.

## Patentansprüche

1. Backofen (1), umfassend
a) mindestens einen Herd (3) mit einem Backraum (4) und
b) eine Heizeinrichtung mit mindestens einem Heizregister (6, 9), das
i) mindestens eine Heizplatte (5, 11) aufweist, die eine Wand eines Backraumes (4) bildet, und
ii) mindestens einen Heiz-Fluid-Kanal (8, 10) zur Führung eines Heiz-Fluids entlang einer Strömungsrichtung (55) aufweist,
ii) wobei jeder Heiz-Fluid-Kanal (8, 10) auf mindestens einer Seite gegenüber einem Backraum (4) durch eine Heizplatte (5, 11) begrenzt wird, wobei
c) entlang eines Teils jedes Heiz-Fluid-Kanals (8, 10) entlang der Strömungsrichtung (55) Turbulenz-Elemente zur Erzeugung von Turbulenzen im Heiz-Fluid vorgesehen sind, **dadurch gekennzeichnet, dass** entlang eines Teils des in Strömungsrichtung (55) nicht mit Turbulenz-Elementen versehenen Teils jedes Heiz-Fluid-Kanals (8, 10) an jeder Heizplatte (5, 11) ein Isolations-Element (53, 54) vorgesehen ist.

2. Backofen (1) gemäß Anspruch 1, **dadurch gekennzeichnet, dass** der Heiz-Fluid-Kanal (8, 10) im Wesentlichen gradlinig und quer zur Beschickungsrichtung des Backofens (1) angeordnet ist.

3. Backofen (1) gemäß Anspruch 1 oder 2, **dadurch gekennzeichnet, dass** mindestens ein Heizregister (6, 9) zwei Heizplatten (5, 11) aufweist, die einen Heiz-Fluid-Kanal (8, 10) gegenüber zwei verschiedenen Backräumen (4) begrenzen.

4. Backofen (1) gemäß Ansprüchen 1 bis 3, **dadurch gekennzeichnet, dass** mindestens ein Heizregister (6, 9) auf der der Heizplatte (5, 11) gegenüberliegenden Seite eine thermische Isolierung (12) aufweist.

5. Backofen (1) gemäß einem der vorangehenden Ansprüche, **dadurch gekennzeichnet, dass** das Heiz-Fluid ein Heizgas oder Öl ist.

6. Backofen (1) gemäß einem der vorangehenden Ansprüche, **dadurch gekennzeichnet, dass** sich der Strömungsquerschnitt jedes Heiz-Fluid-Kanals (8, 10) in Strömungsrichtung (55) verjüngt.

7. Backofen (1) gemäß einem der vorangehenden Ansprüche, **dadurch gekennzeichnet, dass** die Turbulenz-Elemente an jeder Heizplatte (5, 11) vorgesehen sind.

8. Backofen (1) gemäß einem der vorangehenden Ansprüche, **dadurch gekennzeichnet, dass** die Turbulenz-Elemente als schräg entgegen der Strömungsrichtung (55) verlaufende Wirbelbleche (51) ausgebildet sind.

9. Backofen (1) gemäß einem der vorangehenden Ansprüche, **dadurch gekennzeichnet, dass** die Turbulenz-Elemente im Wesentlichen entlang des in Strömungsrichtung (55) hinteren Teils jedes Heiz-Fluid-Kanals (8, 10) angeordnet sind.

10. Backofen (1) gemäß einem der vorangehenden Ansprüche, **dadurch gekennzeichnet, dass** die Turbulenz-Elemente im Wesentlichen entlang 35 % bis 75 % der Länge jedes Heiz-Fluid-Kanals (8, 10) angeordnet sind.

11. Backofen (1) gemäß einem der vorangehenden Ansprüche, **dadurch gekennzeichnet, dass** das Isolations-Element durch einen Isolationsanstrich und/oder ein an der Heizplatte (5, 11) angeordnetes Isolationsblech (53) gebildet wird.

12. Backofen (1) gemäß einem der vorangehenden Ansprüche, **dadurch gekennzeichnet, dass** die Turbulenz-Elemente durch mindestens einen entlang der Strömungsrichtung (55) verlaufenden Steg zu einem in jeden Heiz-Fluid-Kanal (8, 10) einführbaren Einschub zusammengefasst sind.

13. Backofen (1) gemäß einem der vorangehenden Ansprüche, **dadurch gekennzeichnet, dass** die Turbulenz-Elemente mit der Heizplatte (5, 11) verbunden sind oder auf dieser aufliegen oder durch eine Stützeinrichtung an derselben gehalten werden.

## Claims

1. A baking oven (1), comprising
a) at lest one hearth (3) with a baking chamber (4); and
b) a heating device with at least one set of heating elements (6, 9),
i) which comprises at least one heating surface (5, 11) which forms a wall of a baking chamber (4), and
ii) which comprises at least one heating fluid duct (8, 10) for the guidance of a heating fluid in a direction of flow (55),
iii) each heating fluid duct (8, 10) being defined on at least one side towards a baking chamber (4) by a heating surface (5, 11), wherein
c) along part of each heating fluid duct (8, 10), turbulence elements are provided in the direction of flow (55) for the generation of turbulences in the heating fluid, **characterized in that** an insulating element (53, 54) is provided on each heating surface (5, 11) along part of the portion of each heating fluid duct (8, 10) which, in the direction of flow (55), is not provided with turbulence elements.

2. A baking oven (1) according to claim 1, **characterized in that** the heating fluid channel (8, 10) is substantially straight and disposed transversely to the direction of charging of the baking oven (1).

3. A baking oven (1) according to claim 1 or 2, **characterized in that** at least one set of heating elements (6, 9) comprises two heating surfaces (5, 11) which define a heating fluid duct (8, 10) towards two individual baking chambers (4).

4. A baking oven (1) according to claims 1 to 3, **characterized in that** at least one set of heating elements (6, 9) comprises a thermal insulator (12) on the side opposite to the heating surface (5, 11).

5. A baking oven (1) according to one of the preceding claims, **characterized in that** the heating fluid is a heating gas or oil.

6. A baking oven (1) according to one of the preceding claims, **characterized in that** the cross-section of flow of each heating fluid duct (8, 10) tapers in the direction of flow (55).

7. A baking oven (1) according to one of the preceding claims, **characterized in that** the turbulence elements are provided on each heating surface (5, 11).

8. A baking oven (1) according to one of the preceding claims, **characterized in that** the turbulence elements are swirl vanes (51) sloping against the direction of flow (55).

9. A baking oven (1) according to one of the preceding claims, **characterized in that** the turbulence elements are disposed substantially along the rear part, seen in the direction of flow (55), of each heating fluid duct (8, 10).

10. A baking oven (1) according to one of the preceding claims, **characterized in that** the turbulence elements are disposed substantially along 35 to 75 percent of the length of each heating fluid duct (8, 10).

11. A baking oven (1) according to claim 11, **characterized in that** the insulating element is formed by an insulating coat of paint and/or an insulating sheet (53) disposed on the heating surface.

12. A baking oven (1) according to one of the preceding claims, **characterized in that** the turbulence elements are combined by at least one rib extending in the direction of flow (55), forming an insert to be inserted into each heating fluid duct (8, 10).

13. A baking oven (1) according to one of the preceding claims, **characterized in that** the turbulence elements are united with the heating surface (5, 11) or **in that** they rest thereon or **in that** they are retained thereon by a support.

## Revendications

1. Four de cuisson (1), comprenant :
a) au moins une sole (3) avec un espace de cuisson (4) ; et
b) un dispositif de chauffage comportant au moins un registre de chauffage (6, 9),
i) qui présente au moins une plaque chauffante (5, 11), constituant une paroi d'un espace de cuisson (4), et
ii) qui présente au moins un conduit de fluide de chauffage (8, 10) pour le guidage d'un fluide de chauffage suivant un sens d'écoulement (55), et
iii) dans lequel chaque conduit de fluide de chauffage (8, 10) est bordé par une plaque chauffante (5, 11), sur au moins un côté faisant face à un espace de cuisson (4), et dans lequel
c) il est prévu, le long d'une partie de chaque conduit de fluide de chauffage (8, 10), et suivant le sens d'écoulement (55), des éléments à turbulence servant à produire des turbulences dans le fluide de chauffage, **caractérisé en ce qu'**il est prévu un élément isolant (53, 54) au niveau de chaque plaque chauffante (5, 11), le long d'une partie de la partie de chaque conduit de fluide de chauffage (8, 10), qui n'est pas pourvue d'éléments à turbulence dans le sens d'écoulement (55).

2. Four de cuisson (1) selon la revendication 1, **caractérisé en ce que** le conduit de fluide de chauffage (8, 10) est globalement rectiligne et disposé transversalement au sens d'enfournage du four de cuisson (1).

3. Four de cuisson (1) selon la revendication 1 ou 2, **caractérisé en ce qu'**au moins un registre de chauffage (6, 9) présente deux plaques chauffantes (5, 11), qui bordent un conduit de fluide de chauffage (8, 10) en face de deux espaces de cuisson (4) différents.

4. Four de cuisson (1) selon les revendications 1 à 3, **caractérisé en ce qu**'au moins un registre de chauffage (6, 9) présente une isolation thermique (12) sur le côté faisant face à la plaque chauffante (5, 11).

5. Four de cuisson (1) selon l'une des revendications précédentes, **caractérisé en ce que** le fluide de chauffage est un gaz de chauffage ou de l'huile.

6. Four de cuisson (1) selon l'une des revendications précédentes, **caractérisé en ce que** la section de passage de chaque conduit de fluide de chauffage (8, 10) va en s'amincissant dans le sens d'écoulement (55).

7. Four de cuisson (1) selon l'une des revendications précédentes, **caractérisé en ce que** les éléments à turbulence sont prévus au niveau de chaque plaque chauffante (5, 11).

8. Four de cuisson (1) selon l'une des revendications précédentes, **caractérisé en ce que** les éléments à turbulence sont réalisés sous la forme de tôles à tourbillon (51), qui s'étendent obliquement dans le sens opposé au sens d'écoulement (55).

9. Four de cuisson (1) selon l'une des revendications précédentes, **caractérisé en ce que** les éléments à turbulence sont disposés globalement le long de la partie arrière, dans le sens d'écoulement (55), de chaque conduit de fluide de chauffage (8, 10).

10. Four de cuisson (1) selon l'une des revendications précédentes, **caractérisé en ce que** les éléments à turbulence sont disposés globalement le long d'une étendue représentant de 35 % à 75 % de la longueur de chaque conduit de fluide de chauffage (8, 10).

11. Four de cuisson (1) selon l'une des revendications précédentes, **caractérisé en ce que** l'élément isolant est constitué par une couche d'enduit isolant et/ou par une tôle isolante (53), placée contre la plaque chauffante (5, 11).

12. Four de cuisson (1) selon l'une des revendications précédentes, **caractérisé en ce que** les éléments à turbulence sont réunis, par au moins une barrette s'étendant suivant le sens d'écoulement (55), en un dispositif insérable, propre à être introduit dans chaque conduit de fluide de chauffage (8, 10).

13. Four de cuisson (1) selon l'une des revendications précédentes, **caractérisé en ce que** les éléments à turbulence sont reliés à la plaque chauffante (5, 11) ou sont appliqués sur celle-ci, ou encore sont maintenus contre celle-ci par un dispositif d'appui.
